# EUROPÄISCHE PATENTSCHRIFT

(11) **EP 0 720 634 B1**
(45) Veröffentlichungstag und Bekanntmachung des Hinweises auf die Patenterteilung: **18.02.1998**
(21) Anmeldenummer: 94927629.9
(22) Anmeldetag: 17.09.1994
(51) Int. Cl.: C08L 97/00, C08L 89/02, C08L 97/02

(54) **VERROTT- UND KOMPOSTIERBARES NATURSTOFF-GRANULAT AUS ÜBERWIEGEND NACHWACHSENDEN ROHSTOFFEN**
DECOMPOSABLE AND COMPOSTABLE NATURAL SUBSTANCE GRANULATE OF PRIMARILY LATE-GROWTH RAW MATERIALS
GRANULAT DE SUBSTANCES NATURELLES DECOMPOSABLE ET COMPOSTABLE COMPOSE ESSENTIELLEMENT DE MATIERES BRUTES A CROISSANCE POSTERIEURE

(30) Priorität: 20.09.1993 DE 4331747
(43) Veröffentlichungstag der Anmeldung: 10.07.1996
(73) Patentinhaber: LIGNOPOL polymere Stoffe GmbH, 75417 Mühlacker (DE)
(72) Erfinder: WÜNNING, Paul, D-78244 Gottmadingen (DE); WÜNNING, Marcus, D-73061 Ebersbach (DE)
(74) Vertreter: Blum, Rudolf Emil Ernst
(86) Internationale Anmeldenummer: EP9403131
(87) Internationale Veröffentlichungsnummer: WO9508594

(56) Entgegenhaltungen:
- CH-A- 250 077
- DE-A- 2 715 501
- US-A- 3 619 222
- CHEMICAL ABSTRACTS, vol. 118, no. 8, 22. Februar 1993, Columbus, Ohio, US; abstract no. 61791, 'Developments in the production of biobased fiber/plastic alloys' & POLYM. MATER. SCI. ENG., Bd.67, 1992, USA Seiten 461 - 462 ROWELL R. M.

## Beschreibung

Die Erfindung betrifft ein verrott- und kompostierbares Naturstoff-Granulat aus überwiegend nachwachsenden Rohstoffen, aus dem in thermoplastischen Spritzgießverfahren Formteile aller Art hergestellt werden können, sowie das Verfahren zur Herstellung derselben.

Formteile, Gebrauchsgegenstände und Industriewerkstoffe werden gegenwärtig zu einem überwiegenden Teil aus synthetischen Kunststoffen hergestellt, d.h. aus einem Werkstoff, der prinzipiell aus synthetisierten organischen Polymeren besteht. Je nach Anforderungen, Auswahl der Komponenten sowie den Reaktionsbedingungen sind so eine Vielzahl von Elastomeren, Duroplasten und Thermoplasten hergestellt worden. Neben den vielfältigen Vorteilen der synthetischen Kunststoffen, wie die leichte Formgebung und wirtschaftliche Verarbeitbarkeit zur Massenfertigung, der hohen Beständigkeit gegenüber Verrottung und letztendlich das breite Angebot preiswerter Rohstoffe, erwiesen sich gerade letztere in jüngster Zeit auch als problematisch.

Kunststoffe werden in vielen Fällen zur Herstellung von kurzlebigen Wirtschaftsgütern eingesetzt und stellen ein gravierendes Abfallbeseitigungsproblem dar. Auch die Wiederverwertung (Recycling) ist mit großen Schwierigkeiten hinsichtlich der Trennung der verschiedenen Kunststoffe und infolgedessen mit erheblichen Kosten verbunden. Schließlich stellt sich die grundsätzliche Frage der Begrenztheit der Erdölreserven, des prinzipiellen Rohstoffs, der die Grundlage der Kunststoffsynthese bildet.

Daher ergab sich der Wunsch verstärkt nach ökologischeren, d.h. biologisch abbaubaren bzw. kompostierbaren Materialen zu suchen, mit Materialeigenschaften, die mit denen der synthetischen Kunststoffe vergleichbar sind. Insbesondere biologisch synthetisierte Polymere, wie Cellulose, Stärke, Proteine etc., die den Vorteil besitzen regenerierbar zu sein, d.h. die beliebig nachwachsen können und auch biologisch abbaubar, bzw. kompostierbar sind, sind von besonderem Interesse. Dabei sind insbesondere kompostierbare Naturstoff-Polymere von vorrangigem Interesse, da sie im im Unterschied zu biologisch abbaubaren Materialen über einen zum Teil wesentlich kürzeren Zeitraum, in der Regel unter Wärmeentwicklung, vorzugsweise aerob, rückstandslos abgebaut werden. Demgegenüber beanspruchen biologisch abbaubare Materialen für den Zerfall einerseits über wesentlich längere Zeiträume, eher anaerobe Bedingungen und zerfallen zum Teil nur zu 60%, d.h. sie hinterlassen Rückstände.

Im Interessenbereich der erneuerbaren bzw. nachwachsenden Rohstoffe sind Kunststoffe auf der Grundlage von abgewandelten Naturstoffen schon seit langem bekannt. Duroplaste aus Casein-Kunststoffen sowie Thermoplaste aus Cellulose-Nitraten, -Acetaten, -Ester und -Ether sind Stand der Technik. Entsprechende Formteile aus Kunststoff-Granulaten auf der Basis von Cellulose-Derivaten werden unter dem Namen "Bioceta" vertrieben. Auf der Basis von Stärke sind insbesondere von der Firma "Novon Polymers AG/Warner-Lambert Comp." hochwertige natürliche Kunststoffe auf den Markt gebracht worden. Die entsprechende technische Lehre zur Herstellung von Formteilen aus natürlichen Polymeren ist unter anderem in den Patentschriften EP-90600 und DE 3827061/C1 offenbart worden.

Die bekannten natürlichen Kunststoffe (z.B. auf Gelatine-Basis) weisen allerdings einige erhebliche Nachteile auf, wie z.B. die hohe Feuchtigkeitsempfindlichkeit, die durch ihre Neigung Wasser stark aufzunehmen (Hygroskopie) entsteht und durch Zusatz von Weichmachern eher zunimmt. Dadurch verlieren solche natürlichen Kunststoffe über ihre Formstabilität, die bei den synthetischen Kunststoffen besonders geschätzt werden. Darüberhinaus werden zu ihrer Herstellung anhaltend hohe Verfahrenstemperaturen (>180°C) in Anspruch genommen, so daß der Energiebedarf vergleichweise hoch ausfällt. Letztendlich sind die Materialkosten zwischen 10 bis 15 mal höher als die der synthetischen Kunststoffe, so daß die natürlichen Kunststoffe vom Markt als global zu kostenintensiv beurteilt werden.

Aufgabe der vorliegenden Erfindung war infolgedessen die Bereitstellung eines kompostierbaren (rückstandslos abbaubaren) Naturstoff-Granulats aus nachwachsenden Rohstoffen, das eine vergleichsweise energieschonende thermoplastische Verarbeitung in herkömmlichen Kunststoff-Verarbeitungsmaschinen erlaubt. Dabei sollte es möglich sein, gegebenenfalls Parameter, wie die Dichte des Materials sowie seine Feuchtigkeitsresistenz zu variiern, ohne daß dabei die Kompostierbarkeit des letztendlichen Formkörpers verloren gehen sollte. Insbesondere sollte den synthetischen Kunststoff-Granulaten ein wirtschaftlich konkurrenzfähiges Naturstoff-Granulat gegenübergestellt werden, das neben dem ökologischen Aspekt auch unter wirtschaftlichem Gesichtspunkt interessant sein sollte.

Diese Zielvorstellung wird erfindungsgemäß durch ein Naturstoff-Granulat auf der Basis eines Gemisches von Lignin- bzw. Lignin-Derivates und einem Protein, bzw. Protein-Derivates gemäß Anspruch 1 gelöst. Lignin ist ein hochmolekulares, aromatisches (polyphenolisches) Makromolekül, das in verholzenden Pflanzen die Räume zwischen den Zellmembranen ausfüllt und so zu Holz werden läßt. Bei der Zellstoffgewinnung fällt Lignin in großen Mengen als Nebenprodukt an. Lignin kann in der vorliegenden Erfindung in Pulverform oder, beispielsweise in zweiwertigen Alkoholen (z.B Glycol), gelöst eingesetzt werden.

Das Protein-Derivat, kann ein einfaches Gelatine-Hydrolysat sein, d.h. ein sich aus saurem Verkochen ergebendes Kollagen. In einer bevorzugten Ausführung werden Proteide, insbesondere Phosphoproteide (z.B. Casein) verwendet. Phosphoproteide enthalten neben einem Proteinanteil, eine Phosphorsäure-Gruppe in veresterter Form als prosthetische Gruppe. Die Sphäroproteine, Skleroproteine sowie Proteide verfügen über eine 3-dimensionale Tertiär-struktur, die durch eine Vielzahl von Wechselwirkungen, wie z.B. Disulfidbrücken, Dispersions-, Coulomb-Wechselwirkungen und insbesondere aber die inter- bzw. intramolekularen Wasserstoffbrückenbindungen zustandekommen und verfügen nicht über die erforderlichen thermoplastischen Eigenschaften, die für das gewünschte Naturstoff-Granulat erforderlich sind. Gleiches gilt für das Lignin bzw. die Lignin-Derivate, die mit einer polyphenolischen Struktur einen zum Teil 3-dimensionalen Vernetzungsgrad aufweisen, der eher den Duroplasten als den Thermoplasten zuzuordnen ist. Infolgedessen müssen sowohl das Lignin bzw. die Lignin-Derivate, als auch das Protein bzw. die Protein-Derivate einer stereochemischen Modifikation unterworfen werden, die durch Aufbrechen der 3-dimensionalen Tertiär-Struktur zugunsten einer zweidimensionalen thermoplastischen Sekundär-Struktur erreicht wird. Dies wird erfindungsgemäß durch eine saure Vorbehandlung des Gemisches aus Lignin bzw. der Lignin-Derivate und der Proteine bzw. der Protein-Derivate bewältigt. Diese besteht darin, daß die gegebenenfalls alkalischen, wasserunlöslichen Ausgangsprodukte in einer organischen Säure, insbesondere Essigsäure, bei einer Temperatur von +20 bis +90°C und Drücken zwischen 0.1 bis 60 bar zu einer Emulsion gebracht, nach erfolgter Zeitreaktion, d.h. erfolgter stereochemischer Modifikation, ausgefällt und anschließend zu einer Schmelze überführt werden. Die Temperatur und Druckverhältnisse hängen im wesentlichen von der eingesetzten Säure, der Konzentration und zugegebenen Menge derselben ab. Die modifizierte Form des Lignin-bzw. Lignin-Derivates sowie des Proteins bzw. des Protein-Derivates entsteht in einer Zeitreaktion, die zwischen 45 und 420 Sekunden dauern kann.

In einer bevorzugten Ausführungsform wird das Protein-Derivat bei einer Temperatur von +80 bis +85°C mit 0.5-20%iger Essigsäure vermengt, wobei die für die Tertiär-Struktur verantwortlichen Wasserstoffbrückenbindungen aufgebrochen werden und die gewünschte Sekundär-Struktur entsteht. Je nach Anforderung an das Naturstoff-Granulat werden im thermoplastischen Umwandlungsprozess unterschiedliche Anteile an Protein-Derivat mit dem Alkali-Lignin vermischt, gegebenenfalls auch endotherm reagierende Expansionsmittel (z.B. Treibmittel auf der Basis von Bicarbonaten), Flexibilisatoren (z.B. Natur-Latex), Füllstoffe (vorzugsweise mechanisch vorbehandelte Naturfasern wie z.B. C₄-Pflanzen), natürliche Farbpigmente (zur Farbgebung) und Weichmacher (Wasser oder Alkohole) zugemischt werden. Da das Lignin in sekundären Alkoholen (z.B. Glycol) aufgelöst einsetzbar ist, ist somit geeigneterweise der Weichmacher von Anfang an vorhanden. Als Füllstoffe können zwar auch die anorganischen Extender (z.B. Kreide, Talk, Kieselerde) verwendet werden, im Hinblick auf die biologische Abbaubarkeit, insbesondere der Kompostierbarkeit sind aber die organisch-pflanzlichen Füllstoffe wie Strohfasern, Nadelholzextrakte (ohne Rinde) insbesondere aber Schilfgrasfasern bevorzugt.

Zur Herstellung des Naturstoff-Granulats werden die oben genannten Ausgangsstoffe nach für den Fachman bekannten Verfahren, z.B. in Extrudern vermischt wobei nach der Zeitreaktion, d.h. nach 45 bis 420 Sekunden bei einer Prozeßtemperatur von mindestens +95°C (nicht mehr als +125°C) die überschüssige Essigsäure abgedampft wird und eine homogene Schmelze entsteht. Die Schmelze wird anschließend durch einen Düsenkopf mit einem Druck zwischen 50 und 500 bar (abhängig vom Anteil der Naturfasern) gepreßt und erstarrt nach Konditionierung zu einem Halbzeug (Strangguß), das zum Granulat mittels einer mechanischen Zerkleinerungsmaschine weiterverarbeitet wird.

Das sich ergebende Naturstoff-Granulat verhält sich wie ein synthetischer Thermoplast und kann für die Herstellung von Formteilen aller Art nach entsprechend bekannten Verfahren (z.B. Spritzgießverfahren) zu Formteilen (z.B. verrottbare Blumenbehälter, Einweg-Gebrauchsgegenstände) weiterverarbeitet werden. Bei der Herstellung von Formteilen mit geringer Dichte ist es von größter Wichtigkeit, daß der inaktive Porenbildner im Granulat eingebunden ist und in gleichmäßiger Verteilung vorliegt. Dadurch wird erreicht, daß die porenbildende. Reaktion erst bei der Herstellung der Formteile einsetzt und dabei endotherm verläuft.

Das Naturstoff-Granulat ist insbesondere dadurch gekennzeichnet, daß es sich in Wasser innerhalb einer variierbaren Zeitspanne größtenteils auflöst. Damit unterscheidet es sich am deutlichsten von Gebrauchsgegenständen auf der Basis von synthetischen Kunststoffen, die bei anhaltendem Kontakt mit Wasser zur Quellung neigen, nicht aber zum Auflösen in der Lage sind.

Im Folgenden wird die Erfindung durch Beispiele, die in keiner Weise als beschränkend auf die Erfindung ausgelegt werden dürfen, weiter veranschaulicht:

### Beispiel 1 (Herstellung von Naturstoff-Granulat)

In einer Zwangsmischanlage werden 500 g Strohfasern, 175 g Casein und 90 g Alkali-Lignin mit 110 g einer 2%igen Essigsäure bei einer Temperatur von +80°C und einem Druck von 0.1 bar vermischt, wobei sich ein pH-Wert von ca. 4 einstellt. Nach etwa 55 Sekunden ist die Zeitreaktion, die die Stereochemische Modifikation bewirkt beendet und es werden 125 g Glycol zugegeben und das Gemisch zur Aufgabe in den Extruder vorbereitet. Das vorkonfektionierte Materialgemisch wird anschließend in die Einzugsöffnung eines Extruders gegeben und bei einer Temperatur von etwa +120°C zur Schmelze gebracht. Anschließend wird mit einem Druck von etwa 180 bar die Schmelze aus einer Austrittsdüse gepresst, wobei ein Strang erzeugt wird, der nach Konditionierung mittels einer mechanischen Zerkleinerungsmaschine zu 900 g Naturstoff-Granulat weiterverarbeitet wird. Das vorliegende Naturstoff-Granulat wird anschließend in einem thermoplastischen Spritzgußverfahren zu den entsprechenden Formteilen weiterverarbeitet.

### Beispiel 2 (Herstellung von Naturstoff-Granulat)

In die Einzugsöffnung eines Extruders werden 250 g Alkali-Lignin und 250 g Casein mit 600 g einer 2%igen Essigsäure aufgegeben und bei einer Temperatur von +80°C vermischt, wobei sich ein pH-Wert von ca. 5 einstellt. Es werden 400 g Wasser durch Abdampfen bei einer Temperatur von +120°C aus der Mischung entfernt. Anschließend werden 300 g 20%iges Natur-Latex und 200 g Schilfgrasfasern zugegeben, wobei bei einer Temperatur von +120°C und einem Druck von 20 bar eine homogene Schmelze entsteht, die wie in Beispiel 1 erläutert, mit einem Druck von 100 bar aus einem Düsenkopf herausgepreßt und zum entsprechenden Naturstoff-Granulat und anschließend zum Formkörper weiterverarbeitet werden kann. Man erhält etwa 1.1 kg des gewünschten Naturstoff-Granulats, das sich durch hohe Reißfestigkeit und Stabilität auszeichnet.

### Beispiel 3 (Herstellung von Naturstoff-Granulat)

In die Einzugsöffnung eines Extruders werden 400 g eines Alkali-Lignins, 400 g Casein und 800 g einer 2%igen Essigsäure aufgegeben und bei einer Temperatur von +85°C vermischt, wobei sich ein pH-Wert von 4.8 einstellt. Diesem Gemisch werden bei einer Temperatur von +105°C und einem Druck von 30 bar 450 g 20%iges Natur-Latex, 50 g Schilfgrasfasern und 15 g Na-Bicarbonat zugegeben, wobei eine homogene Schmelze entsteht. Anschließend wird die Schmelze, wie in Beispiel 1 beschrieben, mit einem Druck von 80 bar aus einem Düsenkopf herausgepreßt und zum entsprechenden Naturstoff-Granulat und anschließend zum Formkörper weiterverarbeitet. Man erhält etwa 2.1 kg des gewünschten Naturstoff-Granulats. Der im Granulat in- korporierte Porenbildner (Na-Bicarbonat) wird erst im Verlauf der thermoplastischen Weiterverarbeitung aktiviert, so daß sich auf diese Weise vorzugsweise dickwandige Formteile mit geringem Gewicht herstellen lassen.

### Beispiel 4 (Herstellung von Naturstoff-Granulat)

In einer Zwangsmischvorrichtung werden 640 g Strohfasern, 100 g Alkali-Lignin, 120 g Casein und 150 g einer 3%igen Essigsäure bei einer Temperatur von +85°C und einem Druck von 0.1 bar vermischt, wobei sich ein pH-Wert von 4.5 einstellt. Nach 100 Sekunden ist die Zeitreaktion beendet und es werden 120 g Glycol zugegeben und das Gemisch zur Aufgabe in einem Extruder vorbereitet. Das vorkonfektionierte Materialgemisch wird anschließend in die Einzugsöffnung eines Extruders gegeben und bei einer Temperatur von +115°C und einem Druck von 430 bar aus einer Flachdüse herausgepreßt. Der daurch erzeugte Flachstrang wird konditioniert und mit einer mechanischen Zerkleinerungsmaschine zu 1.1 kg Granulat verarbeitet, das sich insbesondere zur Herstellung von Warmpress-Formteilen eignet.

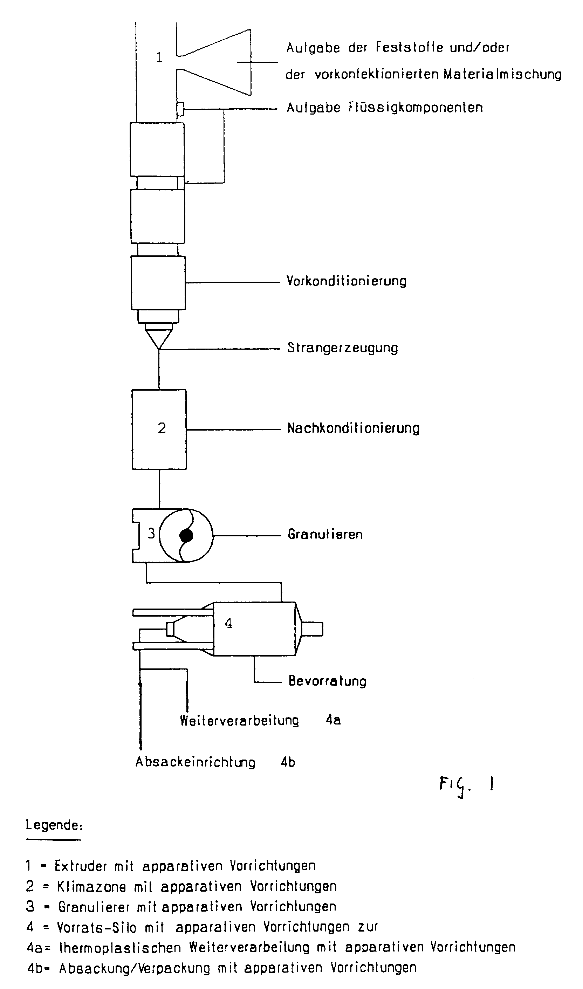

## Patentansprüche

1. Naturstoff-Granulat hergestellt aus Lignin und Proteinen bzw. Protein-Derivaten, dadurch gekennzeichnet, daß das Lignin Alkali-Lignin ist, daß die Protein-Derivate und das Alkali-Lignin das Produkt einer stereochemischen Modifikation durch Behandlung mit organischen Säuren sind und daß das Naturstoff-Granulat thermoplastisch verarbeitbar ist.

2. Naturstoff-Granulat gemäß Anspruch 1, dadurch gekennzeichnet, daß es bei Temperaturen von 90°C bis 130°C thermoplastisch zu Formkörpern verarbeitbar ist.

3. Naturstoff-Granulat gemäß Anspruch 1 oder 2, dadurch gekennzeichnet, daß das Alkali-Lignin in einem Anteil von 15 bis 70 Gew.% vorliegt.

4. Naturstoff-Granulat gemäß Anspruch 1, dadurch gekennzeichnet, daß die Proteine bzw. die Protein-Derivate ein Proteid enthalten oder daraus bestehen.

5. Naturstoff-Granulat gemäß einem der Ansprüche 1 bis 4, dadurch gekennzeichnet, daß das Proteid ein Phosphoproteid, insbesondere Casein enthält oder daraus besteht.

6. Naturstoff-Granulat gemäß einem der Ansprüche 1 bis 5, dadurch gekennzeichnet, daß die organische Säure Essigsäure ist.

7. Naturstoff-Granulat gemäß einem der Ansprüche 1 bis 6, dadurch gekennzeichnet, daß es einen Anteil von 0.1 bis 2.5 Gew.% inaktive porenbildende Additive enthält.

8. Naturstoff-Granulat gemäß einem der Ansprüche 1 bis 7, dadurch gekennzeichnet, daß es einen Anteil von 1 bis 40 Gew.% Naturkautschuk enthält.

9. Naturstoff-Granulat gemäß einem der Ansprüche 1 bis 8, dadurch gekennzeichnet, daß es einen Anteil von 1 bis 20 Gew.% Weichmacher enthält.

10. Naturstoff-Granulat gemäß einem der Ansprüche 1 bis 9, dadurch gekennzeichnet, daß es einen Anteil von 0.5 bis 50 Gew.% ausschließlich mechanisch vorbehandelte Naturfasern, insbesondere Schilfgrasfasern enthält.

11. Naturstoff-Granulat gemäß einem der Ansprüche 1 bis 10, dadurch gekennzeichnet, daß es einen Anteil von 0.05 bis 10 Gew.% Farbpigmente enthält.

12. Verfahren zur Herstellung eines Naturstoff-Granulats gemäß einem der Ansprüche 1 bis 11, dadurch gekennzeichnet, daß die Ausgangsverbindungen gemäß einem der Ansprüche 1 bis 11 mit einer flüchtigen organischen Säure vermischt werden, wobei sich ein pH-Wert von 3 bis 6 einstellt und bei einer Temperatur von +20 bis +90°C und einem Druck von 0.1 bis 60 bar die stereochemische Modifikation des Alkali-Lignins und Proteine bzw. Protein-Derivate erfolgt, anschließend der Ueberschuß der flüchtigen organischen Säure bei einer Temperatur von +90 bis +120°C abgedampft wird und aus einer Austrittsdüse die Schmelze mit einem Druck von 50 bis 500 bar zu einem Stranggut herausgepresst und zu einem Granulat weiterverarbeitet wird.

13. Verfahren gemäß Anspruch 12, dadurch gekennzeichnet, daß das Alkali-Lignin als Pulver, oder in gelöster Form, verwendet werden kann.

14. Verwendung des Naturstoff-Granulats gemäß einem der Ansprüche 1 bis 11 zur thermoplastischen Herstellung von Formkörpern.

15. Formkörper enthaltend Naturstoff-Granulat gemäß einem der Ansprüche 1-11.

## Claims

1. Natural substance granulate manufactured from lignin and proteins or protein derivatives respectively, characterised in that the lignin is the alkali-lignin and whereby the protein derivatives and the alkali-lignin are the product of a stereochemical modification through the treatment with organic acids and wherein the natural substance granulate is processable in a thermoplastic way.

2. The natural substance granulate of claim 1, which is processable in a thermoplastic way at temperatures of between about 90°C and 130°C to provide molded articles.

3. The natural substance granulate of claim 1 or 2, whereby the alkali-lignin is present in an amount of 15 to 70% per weight.

4. The natural substance granulate of any of the claims 1 to 3, whereby the proteins or the protein-derivatives comprise proteids or consist thereof.

5. The natural substance granulate of any one of the claims 1 to 4, whereby the proteid comprises or consists of a phosphoproteid, particularly casein.

6. The natural substance granulate of any one of the claims 1 to 5, whereby the organic acid is acetic acid.

7. The natural substance granulate of any of the claims 1 to 6, which is containing an amount of 0.1 to 2.5% per weight of inactive air entraining agents.

8. The natural substance granulate of any of the claims 1 to 7, which is containing an amount of 1 to 40% per weight of natural caoutchouc.

9. The natural substance granulate of any of the claims 1 to 8, which is containing an amount of 1 to 20% per weight of a plasticiser.

10. The natural substance granulate of any of the claims 1 to 9, which is containing an amount of 0.5 to 50% per weight of mechanically pre-treated natural fibres, particularly sedge fibres.

11. The natural substance granulate of any of the claims 1 to 10, which is containing an amount of 0.05 to 10% per weight of dye pigments.

12. Process for the production of a natural substance granulate according to any one of the claims 1 to 11, characterised in that the starting materials according to any one of the claims 1 to 11 are blended with an organic acid whereby a pH of between 3 to 6, a reaction temperature of between 20 and 90°C and a pressure of between about 0.1 and 60 bar is adjusted and the stereochemical modification of the alkali-lignin and the proteins or the protein derivatives is taking place, thereafter the excess of the organic acid is evaporated at a temperature of 90 to 120°C and the molten mass is pressed with a pressure of 50 to 500 bars through an outlet nozzle in order to provide a strand which is processed to a granulate.

13. The process of claim 12, whereby the alkali lignin is used as a powder or in a solution.

14. Use of the natural substance granulate of any of the claims 1 to 11 for the thermoplastic production of molded articles.

15. Molded articles containing natural substance granulate according to any of the claims 1 to 11.

## Revendications

1. Un granulat de substances naturelles fabriqué à partir de la lignine et des protéines, respectivement des dérivés protéineux, caractérisé en ce que la lignine représente la lignine alcaline et que les dérivés protéineux et la lignine alcaline représentent le produit d'une modification stéréochimique à la suite d'un traitement avec des acides organiques et que le granulat de substances naturelles est ouvrable d'une manière thermoplastique.

2. Le granulat de substances naturelles suivant la revendication 1, caractérisé en ce qu'il est ouvrable aux températures comprises entre 90°C et 130°C d'une manière thermoplastique afin de donner des objets modelables.

3. Le granulat de substances naturelles suivant l'une des revendications 1 ou 2, caractérisé en ce que la lignine alcaline est présente en une teneur de 15 à 70% en poids.

4. Le granulat de substances naturelles suivant la revendication 1, caractérisé en ce que les protéines ou les dérivés protéineux contiennent un protéide ou consiste en ce dernier.

5. Le granulat de substances naturelles suivant l'une des revendications 1 à 4, caractérisé en ce que le protéide contient un phosphoprotéïde, notamment la caséine, ou il consiste en ce dernier.

6. Le granulat de substances naturelles suivant l'une des revendications 1 à 5, caractérisé en ce que l'acide organique est l'acide acétique.

7. Le granulat de substances naturelles suivant l'une des revendications 1 à 6, caractérisé en ce qu'il contient des agents inactifs formant des pores en une teneur comprise entre 0.1 et 2.5 % en poids.

8. Le granulat de substances naturelles suivant l'une des revendications 1 à 7, caractérisé en ce qu'il contient du caoutchouc naturel en une teneur de 1 à 40% en poids.

9. Le granulat de substances naturelles suivant l'une des revendications 1 à 8, caractérisé en ce qu'il contient un plastifiant en une teneur de 1 à 20% en poids.

10. Le granulat de substances naturelles suivant l'une des revendications 1 à 9, caractérisé en ce qu'il contient des fibres naturelles, qui ont été exclusivement traitées par des moyens mécaniques, en particulier des fibres de roseaux.

11. Le granulat de substances naturelles suivant l'une des revendications 1 à 10, caractérisé en ce qu'il contient des pigments colorés en une teneur de 0.05 à 10 % en poids.

12. Un procédé pour la fabrication des granulats de substances naturelles suivant l'une des revendications 1 à 11, caractérisé en ce que les composés suivant l'une des revendications 1 à 11 sont mélangés avec un acide organique volatile, alors qu'un pH compris entre 3 et 6 est ajusté et la modification stéréochimique de la lignine alcaline et des protéines, respectivement des dérivés protéineux est déclenchée sous une température de 20 à 90°C et une pression de 0.1 et 60 bars, ensuite l'excédent de l'acide organique volatile est évaporé à une température comprise entre 90 et 120°C et la coulée est extrudée par une pression de 50 à 500 bars donnant, ainsi, une coulée continue qui peut être traitée afin de donner un granulat.

13. Un procédé suivant la revendication 12, caractérisé en ce que la lignine alcaline peut être utilisé sous forme poudreuse ou bien sous forme d'une solution.

14. Utilisation du granulat de substances naturelles suivant l'une des revendications 1 à 11, pour la fabrication thermoplastique d'objets à mouler.

15. Des objets à mouler contenant du granulat de substances naturelles suivant l'une des revendications 1 à 11.
